Europäisches Patentamt

(19) European Patent Office

Office européen des brevets

(11) Publication number: **0 016 838**
**B1**

(12) **EUROPEAN PATENT SPECIFICATION**

(45) Date of publication of patent specification: **02.06.82**

(51) Int. Cl.³: **B 60 C 11/06**

(21) Application number: **79900595.4**

(22) Date of filing: **29.05.79**

(86) International application number:
**PCT/JP79/00136**

(87) International publication number:
**WO 80/00016 10.01.80 Gazette 80/1**

(54) **ANTI-IRREGULAR WEARING RADIAL-PLY TIRE.**

(30) Priority: **02.06.78 JP 67010/78**

(43) Date of publication of application:
**15.10.80 Bulletin 80/21**

(45) Publication of the grant of the patent:
**02.06.82 Bulletin 82/22**

(84) Designated Contracting States:
**FR**

(56) References cited:
**EP - A - 0 008 259**
**FR - A - 1 009 605**
**FR - A - 2 128 766**
**FR - A - 2 255 191**
**GB - A - 1 046 312**
**JP - A - 49 041 381**
**JP - A - 52 027 775**
**JP - B - 42 002 062**
**JP - B - 47 007 267**
**US - A - 2 056 131**
**US - A - 3 910 930**
**US - A - 3 929 801**

(73) Proprietor: **TOYO RUBBER INDUSTRY CO., LTD.**
**17-18, 1-chome, Edobori Nishi-ku**
**Osaka-shi, Osaka 550 (JP)**

(72) Inventor: **UEMURA, Yukihisa**
**5-8 Kudo 1-Chome, Ojicho**
**Kitakatsuragi-gun, Nara 636 (JP)**

(74) Representative: **Harlé, Robert et al,**
**c/o Cabinet Harlé & Phélip 21, rue de la**
**Rochefoucauld**
**F-75009 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Anti-irregular wearing radial-ply tire

Technical Field

This invention relates to improvement in irregular wear resistance of radial ply tire, and more particularly to the provision of a radial ply tire capable of increasing the length of wear life by the alleviation in irregular wear or excessive wear liable to occur in the shoulder portions.

Background art

In general, radial ply tires have many advantages over bias ply tires, for example, better wear resistance, lower rolling resistance, lower heat build-up, better durability, better cornering property, etc.

On the other hand, however, it is also well-known that radial ply tires, when used as a steering wheel, are accelerated to wear off in the shoulder portions and are likely to eventually cause irregular-wear or excessive wear. Because the radial ply tires mounted as steering wheels will run in a state that the distribution of load over the tread portion varies owing to the front wheel alignment they are set and with the change in tire posture occurring upon steering, and the magnitude of slipping varies locally over the tread portion.

The irregular wear or excessive wear indispensably shortens the wear life of the tire, and the tread portion thus assuming uneven wearing state will disadvantageously cause vibration and slippage of the tire.

There are known radial ply tires whose tread profile is constructed of three circumferential zones of different rigidity so as to obtain a regular wear effect. For example, according to FR—A—2 255 191, a radial ply tire of that kind is proposed in which in order to decrease a tread wear, particularly in the shoulder zone and ensure good water drainage effect, the crown zone is delimited by circumferential grooves and has a width of up to 6/10 the tread width and the shoulder zones each are defined with transverse grooves and a wide rib.

In order to eliminate the drawbacks inherent in prior art radial ply tires, the present invention is contemplated providing a novel radial ply tire in which a contrivance for diminishing the irregular wear which has hitherto remained to be solved may be readily applied merely by a slight modification to the production line being currently practiced.

The invention has been accomplished based on the investigation into a correlationship between the contoured profile and thread pattern of the tire under inflation condition of a prescribed pressure and the occurrence of irregular wear. Thus, there is provided a radial ply tire capable of greatly improving on irregular wear by a specified configuration of grooves formed on a specified zone of the tread portion.

Disclosure of invention

The radial ply tire of the invention having a tread portion comprising central zones which extend, on both sides of the mid-circumferential line of the tire and near-shoulder zones which extend laterally adjoining to said central zones is characterized in that said central zones each are determined to have a width in the range of up to a straight distance (w) from said mid-circumferential line represented by the formula:

$$w = \frac{W}{2} - 0.365\,H$$

(wherein W and H are a section width and a section height outward of a rim flange, respectively of the tire when inflated to a prescribed air pressure) and are defined with continuous circumferential grooves and the near-shoulder zones are formed with discontinuous grooves or sipes.

Brief description of the drawings

Fig. 1 is a cross-sectional view of a conventional radial ply tire when inflated to a prescribed air pressure;

Fig. 2 is a graph showing the variation in magnitude of slipping of a conventional radial ply tire;

Fig. 3 is an enlarged view of the essential part of the tire as disclosed in Fig. 1;

Fig. 4 is a cross-sectional view of a radial ply tire according to this invention when inflated to a prescribed air pressure;

Fig. 5 is a plan view, developed in plane, of the tread portion of the tire shown in Fig. 4; and

Fig. 6 is a graphic diagram of mileage to depth of wear showing wearing states of three kinds of radial ply tires in comparison.

Best mode for carrying out the invention

The embodiments of the tire constructed according to this invention having the foregoing features will be hereinbelow described in greater detail with reference to the accompanying drawings.

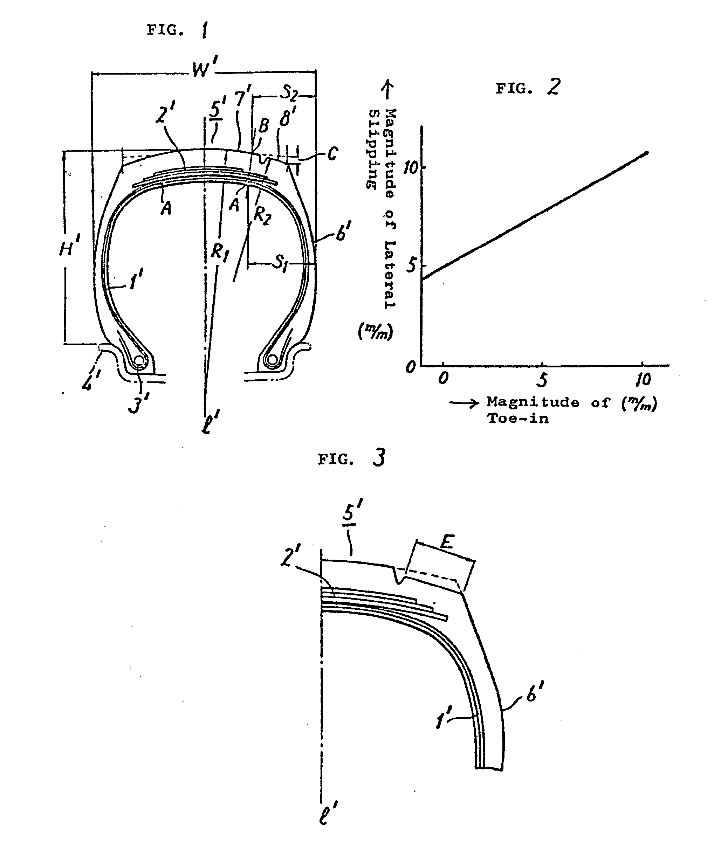

Referring to Fig. 1, a prior art radial ply tire inflated to a prescribed air pressure is illustrated by a cross-section of a plane containing the rolling axis of the tire. The reference numeral 1' is radial carcass plies, 2' steel belts, 3' bead wires, 4' a rim flange portion, 5' a tread portion, and 6' a sidewall portion.

The tread portion 5' consists of central zones 7', 7' extending on both sides of the mid-circumferential line l' of the tire and near-shoulder zones 8', 8' extending on both sides of the central zones 7' and adjoining to the sidewall portions 6', 6'.

The general radial ply tire thus constructed and inflated to a prescribed air pressure was measured and analyzed with respect to sectional profile. In consequence, it was proved that the central zones 7', 7' are formed into an area of contact with the road surface having a greater radius of curvature, $R_1$, whereas the near-shoulder zones 8' are formed into an area of contact with the road surface having a smaller radius of curvature, $R_2$ and $R_1$ with the outermost position thereof being subsided inwardly in the direction of the mid-circumferential line by a distance of C from the hypothetical line extrapolated and drawn from the area of contact between the central zone 7' and the road.

It is evidently inferred from the preceding analysis of tread profile that when the tire assuming such profile comes into contact with a flat road and the tread portion 5' is displaced to a flat profile, the near-shoulder zones 8' are deformed more greatly and slip against the road more greatly as compared with the case with the central zones 7'.

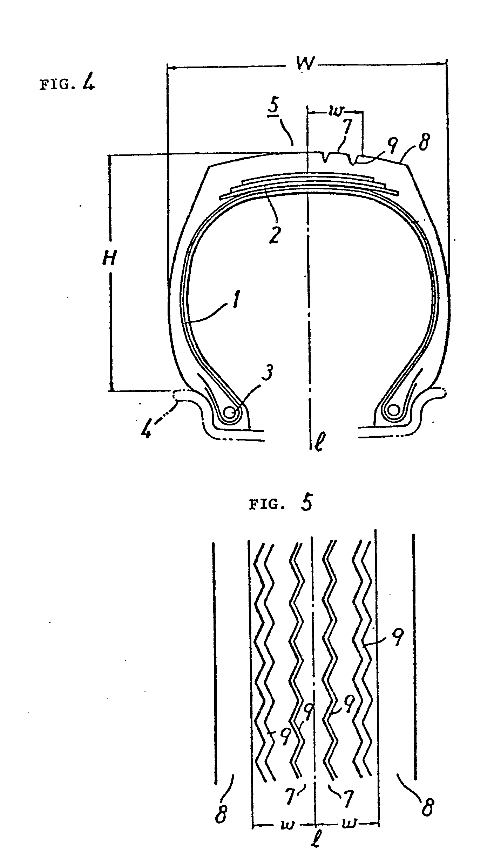

Further investigation has revealed that in the configuration profile of ply cords, the central crown area A—A is formed to a curved surface of a greater radius of curvature which is tangent to the curved surface forming the sidewall at the point A and the near-shoulder zones 8' are formed axially outward of the point B on the area of contact with the ground, with which point a perpendicular line drawn from the point A to the area of contact with the ground intersects; and that localized irregular wear occurs in the near-shoulder zones 8' as illustrated in Fig. 3.

Width distances $S_1$ from the maximum point of section width W' to the point A was measured on various tires diverse in size and flatness ratio, and as a result, it was found that $S_1$ is in the range of approximately 0.290 H' to 0.385 H' based on the section height H' of the tire outward of the rim flange.

On the other hand, it was found that the distance from the maximum point of section width to the point B on the area of contact with the ground, i.e. $S_2$ is in the range of approximately 0.276 H' to 0.365 H'.

A general radial ply tire, for example, one having a size and type of 10.00 R 20—14 PR was mounted and used for a front steering wheel in a state of inflation under a prescribed air pressure (7.25 Kg/cm$^2$) and was measured on a sideslip tester with respect to slideslip properties. Fig. 2 shows that the tire runs causing sideslip because front wheel alignment, particularly toe-in is set.

Further, in the situation where such tire, when running while causing the sideslip as shown in Fig. 2, is diminished in friction force between the road surface and the area of contact of the tire owing to the decrease in its contact pressure exerted on the road which decrease is caused by large deformation and slipping that occurred upon being in contact with the road, the near-shoulder zone 8' is likely to cause irregular wear. Particularly, where the tire is of a rib type, it is liable to deform transversely owing to the low rigidity, namely the narrow rib width E (see Fig. 3) of the near-shoulder zone, so that wear occurs still more around the near-shoulder zone, which eventually leads to the occurrence of irregular wear or excessive wear.

Accordingly, the present invention is based on the analysis and discovery above, and is characterized by not forming such grooves that have a significant influence on the occurrence of irregular wear, more particularly, continuous circumferential grooves in the near-shoulder zones 8' sideward of the point B in Fig. 1.

That is, the irregular wear or excessive wear can be restrained to a substantial degree from occurring by specifying the distance of $S_2$ in Fig. 1 to be up to the maximum value of the foregoing range, namely 0.365 H' and by not forming continuous circumferential grooves in the range of that distance, thus widening the width of the shoulder rib.

A radial ply tire of this invention as constructed in this manner is illustrated in Fig. 4 and Fig. 5. That is, the radial ply tire having a section height H outward of rim flange and a section width W when inflated to a prescribed air pressure has a tread portion 5 extending between sidewall portions 6, 6 which is characterized in that central zones 7, 7 are determined to extend, on both sides of the mid-circumferential line I of the tire, each within a straight distance of w from said line, which distance is obtained by subtracting 36.5% the section height H from 1/2 the section width W and that the central zones 7, 7 are defined by continuous circumferential grooves 9 whereas near-shoulder zones 8, 8 have no continuous circumferential groove.

Discontinuous grooves or sipes, however, may be formed in the near-shoulder zones 8, provided that the rigidity of the rib is not impaired.

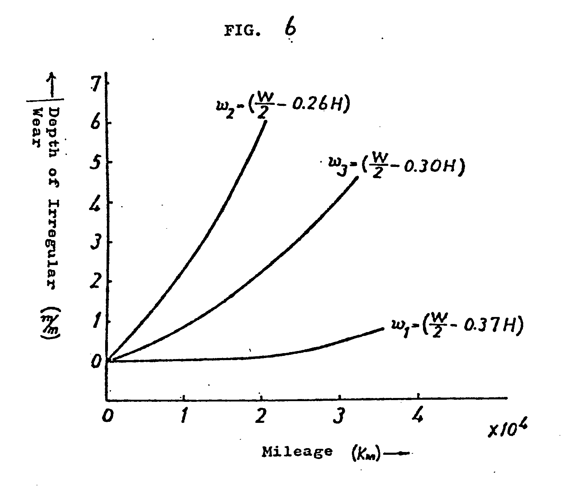

Three kinds of radial ply tires each of 10.00 R 20—14 PR in size and type, which have such tread configurations that the central zone 7 of the respective tires has a distance of $w_2 = W/2 - 0.26$ H, $w_3 = W/2 - 0.30$ H and $w_1 = W/2 - 0.37$ H, respectively, and only the central zones of each tire are formed with continuous circumferential grooves 9, were tested under the same air inflation condition as above with respect to irregular wear. Fig. 6 shows that a good result is obtained with the tire having grooves in the central zones of $w_1 = W/2 - 0.37$ H, that is, the tire is greatly alleviated in local wear in the near-shoulder zones 8.

It was thus proved that the present invention is in good agreement with the empirical data.

As will be apparent from the description thus far made, this invention provides a radial ply tire wherein the tread portion 5 extending between the sidewall portions 6, 6 comprises central zones 7 which are determined to extend on both sides of the mid-circumferential line I of the tire

each within a straight distance of w from said line, which distance is obtained by the subtraction of 36.5% the section height H from 1/2 the section width W, said H and W being a section height outward of the rim flange 4 and a section width, respectively of the tire upon inflation of a prescribed air pressure; and which are formed with continuous circumferential grooves 9. Consequently, the rib width in the shoulder portion is substantially widened and the rigidity in this portion is significantly increased, so that the magnitudes of the deformation and slipping of the tire in contact with the ground are decreased, thus enabling the alleviation in local irregular wear and the prolongation in duration of life of the tire.

Furthermore, it is feasible to build up the present tire on mass-production scale only by some modification to the tread pattern of the mould currently used and without any change in the production line currently practiced. Hence, the production cost is inexpensive.

The present invention is thus very practicable and useful.

**Claims**

1. A radial ply tire having a tread portion (5) comprising central zones (7) (7) which extend on both sides of the mid-circumferential line (1) of the tire and near-shoulder zones (8) (8) which extend laterally adjoining to said central zones (7) (7), characterized in that said central zones (7) (7) each are determined to have a width in the range of up to a straight distance (w) from said mid-circumferential line (1) represented by the formula:

$$w = \frac{W}{2} - 0.365\,H$$

(wherein W and H are a section width and a section height outward of a rim flange, respectively of the tire when inflated to a prescribed air pressure) and are defined with continuous circumferential grooves (9) and the near-shoulder zones (8) (8) are formed with discontinuous grooves or sipes.

**Revendication**

1. Pneumatique à plis radiaux comportant une partie formant bande de roulement (5) comprenant des zones centrales (7) (7) qui s'étendent sur les deux côtés de la ligne circonférencielle médiane (1) du pneumatique et des zônes proches des épaulements (8) (8) qui s'étendent latéralement et sont contigües aux dites zones centrales (7) (7), caractérisé en ce que lesdites zones centrales (7) (7) sont chacune déterminées de manière à avoir une largeur comprise dans la gamme allant jusqu'à une distance (w) de ladite ligne circonférencielle médiane (1) qui est représentée par la formule:

$$w = \frac{W}{2} - 0{,}365\,H,$$

(où W et H désignent respectivement, en section, la largeur et la hauteur, à l'extérieur du rebord de jante, du pneumatique lorsqu'il est gonflé à la pression d'air prescrite) et sont pourvues de rainures circonférencielles continues (9), et en ce que les zones proches des épaulements (8) (8) sont pourvues de rainures ou évidements discontinus.

**Patentanspruch**

1. Gürtelreifen mit einer ein Profil aufweisenden Lauffläche (5), die mittlere, sich beiderseits der Umfangsmittellinie (1) des Reifens erstreckende Zonen (7) (7) und schulternahe, sich beiderseits anschließend an die mittleren Zonen (7) (7) nach außen erstreckende Zonen (8) (8) aufweist, dadurch gekennzeichnet, daß für jede der mittleren Zonen (7) (7) eine Breite bis zu maximal einem geraden Abstand (w) von der Umfangsmittellinie (1) festgelegt wird, der durch die Formel

$$w = \frac{W}{2} - 0{,}365\,H$$

dargestellt wird (in der W und H die Breite bzw. die Höhe eines jeweiligen Reifenabschnitts außerhalb des Felgenflansches bezeichnen, wenn der Reifen auf den vorgeschriebenen Luftdruck aufgepumpt ist) und daß diese mittleren Zonen über den gesamten Umfang hinweg kontinuierlich durchgehende Profilrillen (9) aufweisen und daß die schulternahen Zonen (8) (8) mit diskontinuierlichen Profilrillen oder Ablaufrinnen (sipes) ausgebildet sind.

FIG. 1

FIG. 2

FIG. 3

FIG. 4

FIG. 5

FIG. 6